# EUROPEAN PATENT APPLICATION

(11) **EP 1 504 864 A1**
(43) Date of publication of application: **09.02.2005**
(21) Application number: 03425537.2
(22) Date of filing: 06.08.2003
(51) Int. Cl.: B27M 3/00, B23P 19/04

(54) **A machine tool for positioning and fastening hinges on aluminium, iron, PVC, etc. window and door profiles**

(71) Applicant: Nurith S.r.l., 74013 Ginosa (TA) (IT)
(72) Inventor: Bitetti, Vincenzo, 74013 Ginosa (TA) (IT)
(74) Representative: Sneider, Massimo

(57) **Abstract**

This invention relates to a machine tool comprising a bench (1) featuring one or more housings for workpiece; one or more levers for measuring the length of the workpiece; two or more mobile jigs (7) fixing the positions in which the hinges must be fastened to the workpiece; a two-speed axle moving the jigs; an electric motor (14) rotating the axle; a screwing-machine with a screw feeder, for fastening the screws; a mobile support for moving the screwing-machine along the length of the workpiece; an oleo-pneumatic device operating the screwing-machine; a device for feeding the workpieces onto the bench.

## Description

### Technical field

This invention relates to a machine tool for automatically positioning hinges and semi-automatically fastening them to window and door profiles.

### Background of art

At present, many of the machining operations required to manufacture windows and doors, after the selection of the appropriate profiles, are carried out manually by skilled workers and this entails high labour costs, long construction times and problems in long-term production planning.

Among the different operations carried out exclusively by hand is the positioning and fastening of the hinges to the profiles, which is done manually by a worker that takes the workpiece from the warehouse, places it on a workbench and makes the necessary measurements to position each of two or three hinges in the exact position - based on the length of the profile and at the correct distance from the edge of the profile, also making sure that the hinges are in axis. Obviously, this operation is very time-consuming and requires a great deal of attention, but, despite this, mistakes can be made.

### Disclosure of invention

The present invention relates to a machine tool for automatically positioning the hinges and semi-automatically fastening them to the profile, capable of remedying the aforementioned shortcomings.

In the preferred embodiment of this invention, the machine tool comprises a bench featuring one or more housings for the workpiece; one or more levers for measuring the length of the workpiece; two or more mobile jigs fixing the positions in which the hinges must be fastened to the workpiece; a two-speed axle moving the jigs; an electric motor rotating the axle; a screwing-machine with a screw feeder, for fastening the screws; a mobile support for moving the screwing-machine along the length of the workpiece; an oleo-pneumatic device operating the screwing-machine; a device for feeding the workpieces onto the bench.

The operation of the machine is based on the principle that - having determined the length of the profile - the hinges must be placed at proportional distances from the top and the bottom of the workpiece and - in the case of windows/doors with three hinges - the middle one must be positioned in between the two at the opposite ends.

To achieve this objective, the machine tool comprises a bench with a housing for the workpiece and measuring devices for determining the length of the workpiece, which are integral with a longitudinal mobile jig arm, parallel to the length of the workpiece; the first measuring device - placed at the free end of the workpiece - is moved along it by the rotation of the slow-speed axle until it reaches the end of the workpiece, while at the same time the first hinge-positioning jig advances; simultaneously, the fast-speed axle rotates (with the same number of revolutions), causing the second jig to travel a distance that is double the one of the first jig, positioning itself at the end of the workpiece (or in the middle between the two jigs in the case a third hinge is required).

Once it has reached the correct position (based on the length of the workpiece), the jigs are lowered onto the workpiece - by the oleo-pneumatic device - and the operator places the hinges in the jigs and fastens them onto the workpiece with the mobile screwing-machine with screw feeder.

### Brief description of drawings

A specific embodiment of the invention will now be described by way of example with reference to the accompanying drawing in which:

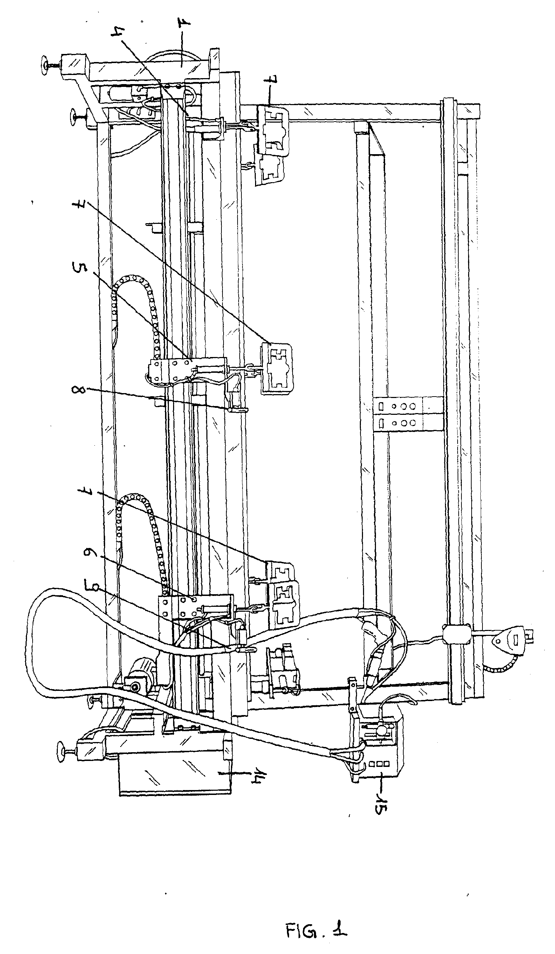

Fig. 1 shows a front view of the machine tool.
Fig. 2 shows a schematic front view of the machine tool with the two-speed axles.

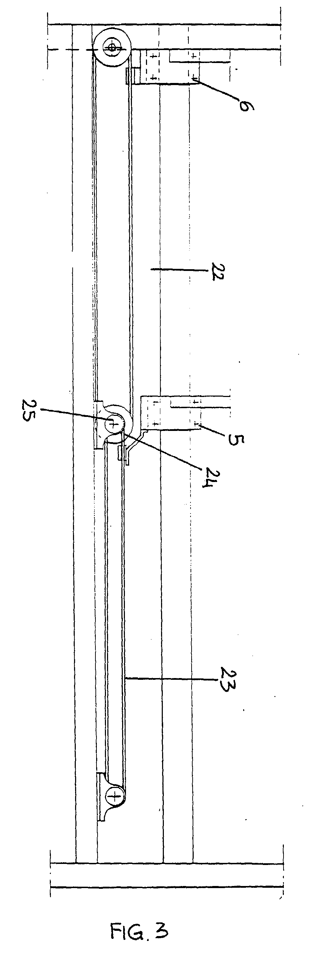

Fig. 3 shows a schematic view of an alternative jig movement system.
Fig. 4 shows a detail of the two-speed axles.

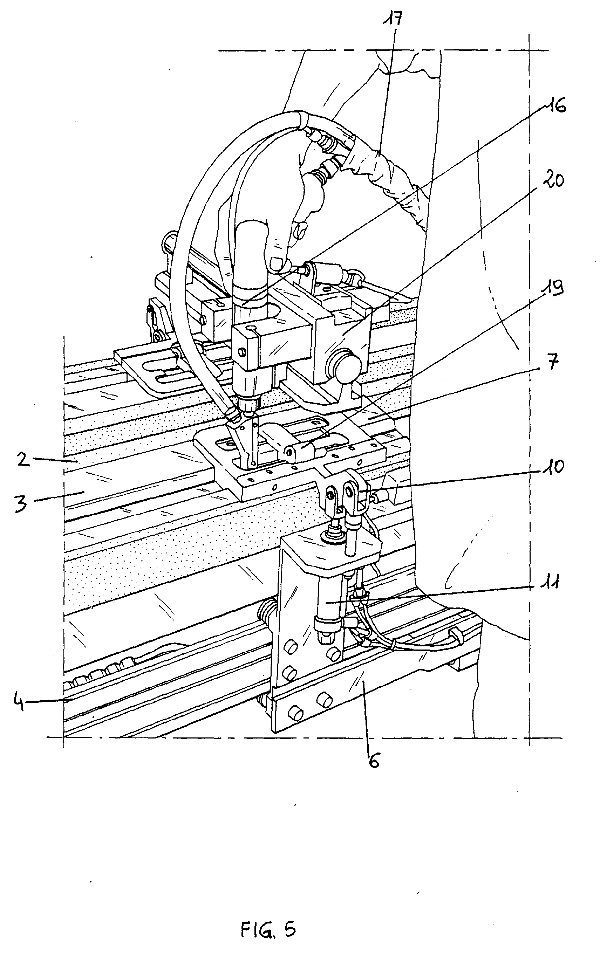

Fig. 5 shows a top view of the jig arm - jig - screwing machine set.
Fig. 6 shows a schematic view of the workpiece feeder.

### Description of the preferred embodiment

Referring to the drawing, in the preferred embodiment of this invention the machine tool comprises a bench (1) on top of which are the housings (2) for the workpieces (3).

On the front of the bench - and lower down compared to the work surface - there is a guide (4) in which travel two supports (5,6), each of which is integral with a mobile interchangeable jig (7) and a workpiece length measuring device (8, 9). The jigs (7) are hinged onto the supports (5,6) in (10) and can rotate by approx. 90°, moving from a position above the workpiece (3) to a position on top of it, while the hinge screws are fastened; the jigs are automatically moved by means of oleo-pneumatic pistons (11), until they reach the correct position on top of the workpiece (3).

The length measuring devices (8, 9) are hinged to the supports (5, 6) and are positioned by the operator in the reading position [i.e. from a raised position they are lowered at the free end of the workpiece (3)]; these devices command the lowering of the jigs (7) when they reach the workpiece length reading position.

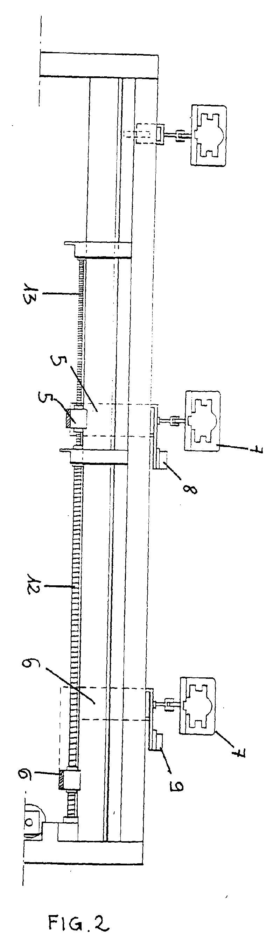

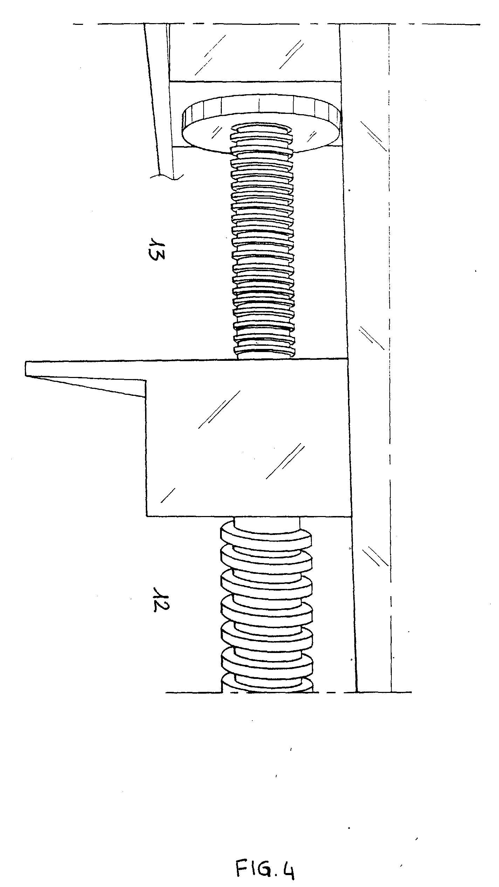

As mentioned above, the supports (5, 6) - provided with a threaded hole for the rotating axle - travel along the guide (4) being moved by the two-speed axle (12, 13) rotated by the motor (14); the drawings show, in particular figs. 2 and 4, that the thread pitch of section (12) of the axle is double compared to that of section (13), so that, when the axle rotates, the support (5) engaged by section (13) travels double the distance of the support (6) engaged by section (12). This means that, once the operator has activated the workpiece length measuring device (either 8 or 9) and started the rotation of the axle, the support (5) and/or (6) - and consequently the jig (7) - positions itself directly at the point where the hinge is to be fastened.

Once they have reached the exact position determined by the length measuring devices (8, 9), the jigs (7) - moved by the oleo-pneumatic pistons (11) - are lowered down on top of the workpiece so that the hinges (19) can be placed inside them and screwed onto the workpiece by means of the screwing-machine (16), with a screw-feeder (17). The screwing-machine (16) can travel both along and across the surface of the workbench and, above all, of the workpiece (3), thanks to the support (20) that slides inside a guide placed alongside the bench (1); this is to ease the operator's work, while at the same time ensuring the accurate positioning and fixing of the screws.

Each machine tool comprises two housings (2) and relative jigs (7), length measuring devices (8, 9), supports (5, 6), guides (4), on both sides of the bench, so as to allow the simultaneous working of two workpieces.

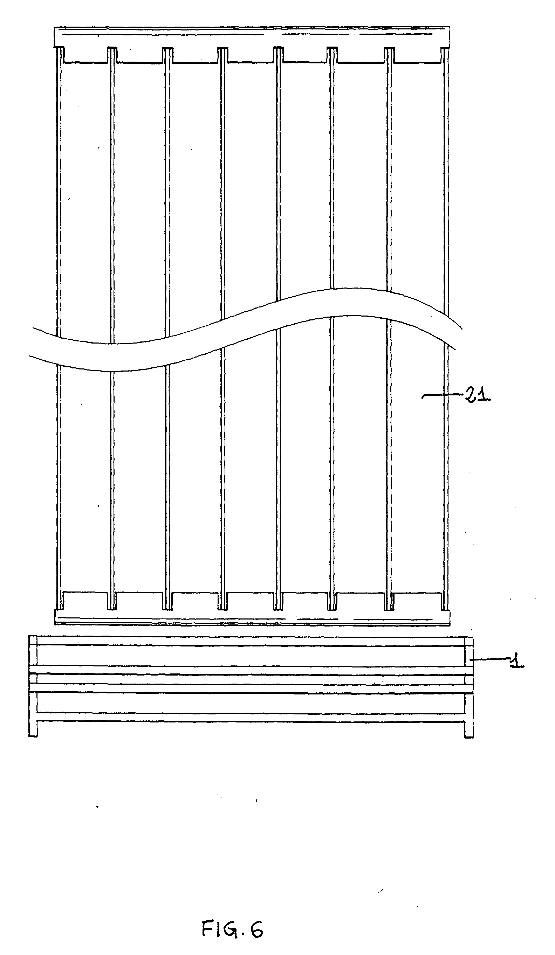

To further speed up and facilitate the hinge fastening operations, the machine tool can be used in association with a conveyor belt (21) for feeding the workpieces to the machine, which is shown in fig. 6.

Although the support (5, 6) moving device in the preferred embodiment is the aforementioned two-speed axle, the same end results can be obtained by connecting the said supports (5, 6) to positive drive belts (22, 23) (see fig: 3), each of which engages a gear wheel. The two gear wheels (24, 25) are integral, but gear wheel (24) has a diameter twice that of gear wheel (25), in order to obtain the proportional movement of the support (5) connected to the drive belt (23), compared to the support (6) connected to the drive belt (22), achieving the same movements as per the preferred embodiment with the two-speed axle.

The type of motor driving the axle and pulleys and the means for activating the hinge-positioning jigs and all the other mechanisms making up the machine tool can, of course, be modified, according to the desired quality and price specifications.

The principles of the invention are described hereinabove by describing the construction and operation of a preferred and other embodiment. It is to be remembered that this exemplary embodiment can be modified or changed without departing from the spirit or scope of the invention as defined by the following claims.

## Claims

1. A machine tool for positioning and fastening hinges on aluminium, iron, PVC, etc. window and door profiles comprising, a bench (1) featuring one or more housings (2) for the workpieces (3); a guide (4) on the front of each side of the bench (1), located below the work surface; a two-speed rotating axle, with one section (12) featuring a pitch that is double that of another section (13); two supports (5, 6) featuring a threaded hole for the two-speed rotating axle sections (12, 13), each support being integral with a mobile and interchangeable hinge-positioning jig (7) and a workpiece length measuring device (8, 9), which also commands the lowering of the jigs onto the workpiece; a motor for rotating the two-speed axles (12, 13); oleo-pneumatic pistons (11) for moving the jigs (7); a screwing-machine (16) with relative screw feeder (17); a sliding support (20) moving along and across the workbench and holding the screwing machine.

2. A machine tool for positioning and fastening hinges on aluminium, iron, PVC, etc. window and door profiles described in claim 1, wherein the supports (5, 6) - provided with a threaded hole for the rotating axle - travel along the guide (4) being moved by the two-speed axle (12, 13) rotated by the motor (14); the thread pitch of section (12) of the axle is double compared to that of section (13), so that, when the axle rotates, the support (5) engaged by section (13) travels double the distance of the support (6) engaged by section (12).

3. A machine tool for positioning and fastening hinges on aluminium, iron, PVC, etc. window and door profiles described in the foregoing claims, wherein the length measuring devices (8, 9) are hinged to the supports (5, 6) and are positioned by the operator in the reading position [i.e. from a raised position they are lowered at the free end of the workpiece (3)].

4. A machine tool for positioning and fastening hinges on aluminium, iron, PVC, etc. window and door profiles described in the foregoing claims, wherein the jigs (7) - moved by the oleo-pneumatic pistons (11) - are lowered down on top of the workpiece (3), when the reach the lengthwise position determined by the length-measuring devices (8,9).

5. A machine tool for positioning and fastening hinges on aluminium, iron, PVC, etc. window and door profiles described in the foregoing claims, wherein the hinges (19) are fastened to the workpiece (3), after having been placed inside the jigs (7), by means of the screwing-machine (16) provided with a screw-feeder (17).

6. A machine tool for positioning and fastening hinges on aluminium, iron, PVC, etc. window and door profiles described in the foregoing claims, wherein the same lengthwise movement of the supports can be obtained by connecting the said supports (5, 6) to positive drive belts (22, 23), each of which engages a gear wheel; the two gear wheels (24, 25) are integral, but gear wheel (24) has a diameter twice that of gear wheel (25), in order to obtain the proportional movement of the support (5) connected to the drive belt (23), compared to the support (6) connected to the drive belt (22).
